# EUROPEAN PATENT SPECIFICATION

(11) **EP 0 624 924 B1**
(45) Date of publication and mention of the grant of the patent: **04.09.2002**
(21) Application number: 94303317.5
(22) Date of filing: 09.05.1994
(51) Int. Cl.: H01R 13/53, H01H 33/02, H02B 13/00, H02B 13/02

(54) **Conductive connector for switchgear**
Leitender Verbinder für Schaltanlage
Connecteur conductif pour appareil de commutation

(30) Priority: 12.05.1993 JP 11038093; 31.05.1993 JP 12855293; 08.07.1993 JP 16910193
(43) Date of publication of application: 17.11.1994
(73) Proprietor: SHOWA ELECTRIC WIRE & CABLE CO.,LTD., Kawasaki-shi, Kanagawa-ken (JP); KABUSHIKI KAISHA TOSHIBA, Kawasaki-shi, Kanagawa-ken 210-8572 (JP)
(72) Inventor: Miyagawa, Masaru, Intellectual Property Div., Minato-ku, Tokyo (JP); Masaki, Nobuo, c/o Intellectual Property Div., Minato-ku, Tokyo (JP); Satou, Akira, c/o Intellectual Property Div., Minato-ku, Tokyo (JP); Yoshida, Tetsuo, c/o Intellectual Property Div., Minato-ku, Tokyo (JP); Nonoshita, Tadashi, c/o Intellectual Property Div., Minato-ku, Tokyo (JP); Satou, Kenichi, c/o Intellectual Property Div., Minato-ku, Tokyo (JP); Kinoshita, Susumu, c/o Intellectual Property Div., Minato-ku, Tokyo (JP); Nagata, Takafumi c/o Intellectual Property Div., Minato-ku, Tokyo (JP); Sonobe, Hiroshi c/o Intellectual Property Div., Minato-ku, Tokyo (JP); Kojima, Ryouichi, Hiratsuka-shi, Kanagawa-ken (JP); Kase, Tadashi, Fujisawa-shi, Kanagawa-ken (JP); Hasegawa, Naoya, Yokohama-shi, Kanagawa-ken (JP)
(74) Representative: Brookes Batchellor

(56) References cited:
- EP-A- 0 083 092
- EP-A- 0 148 394
- PATENT ABSTRACTS OF JAPAN vol. 017 no. 371 (E-1396) ,13 July 1993 & JP-A-05 056541 (FUJI ELECTRIC CO LTD) 5 March 1993,
- PATENT ABSTRACTS OF JAPAN vol. 016 no. 037 (E-1160) ,29 January 1992 & JP-A-03 245419 (TOSHIBA CORP) 1 November 1991,
- PATENT ABSTRACTS OF JAPAN vol. 015 no. 359 (E-1110) ,11 September 1991 & JP-A-03 141517 (SHOWA ELECTRIC WIRE & CABLE CO LTD) 17 June 1991,

## Description

This invention relates to conductive connectors for electrical switchgear which, for instance, make cable connections between the cubicles of a metal closed type switchgear in which insulating gas is sealed.

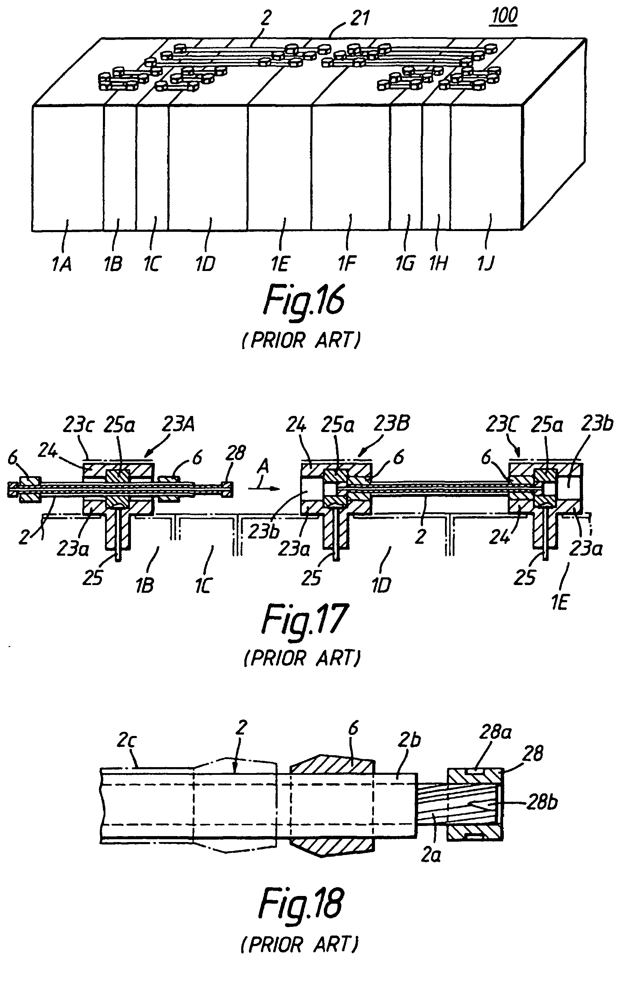

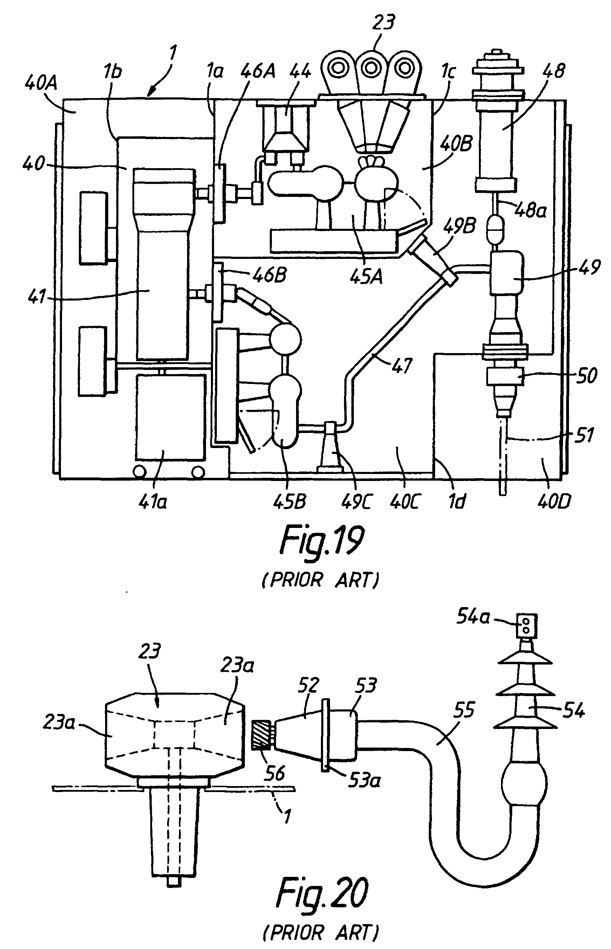

Figure 16 of the accompanying drawings is a perspective view showing prior art switchgear conductive connectors 21 penetrating the top ceiling plates of cubicles 1A, 1B, 1C, 1D, 1E, 1F, 1G, 1H and 1J, which comprise power distribution facility 100, and are connected by cables 2. Figure 17 is an enlarged vertical cross-section which shows the conductive connectors 21 on the top plates of cubicles 1B, 1D and 1E. Figure 18 shows a partial detailed enlargement of Figure 17.

In Figures 16, 17 and 18, T-shaped bushings 23A, 23B and 23C, disclosed in EP-0148394(B1), penetrate the top plates of cubicles 1B, 1D and 1E respectively. They are hermetically secured via O-rings (not illustrated) which are fitted to the top plates. T-shaped bushings identical T-shaped bushings 23A, 23B and 23C also vertically penetrate the top plates of other cubicles 1A, 1C, 1F, 1G, 1H and 1J as shown in Figure 16.

In these T-shaped bushings 23A, 23B and 23C, roughly T-shaped insulating layers 24, which are injection-moulded in epoxy resin, are formed on the outer peripheries of roughly T-shaped central conductors 25. Through-holes 23b which penetrate from left to right in Figure 17 are formed in the portions (hereafter, "heads") 23a which project above the top of cubicles 1B, 1D and 1E. Earthing layers 23c are formed on the outer peripheries of heads 23a.

In Figures 17 and 18, cylindrical contact pieces 28 are fitted round the ends of core wires 2a of cables 2. These are secured by wedges 28b inserted into the ends of core wires 2a. Grooves are formed in the outer peripheries of contact pieces 28 and ring-shaped contact plates 28a, made of conductive spring material are fitted in these grooves.

At the two ends of cables 2, roughly cylindrical stress-cones 6 are inserted on inner sheaths 2b from which outer sheaths 2c have been removed. These cones 6 are inserted in through-holes 23b of heads 23a on cubicles 1D and 1E shown in Figure 17, and are pressed inward by presser pieces (not illustrated).

In conductive connectors with this type of construction, when, for instance, making connection with cable 2 between T-shaped bushings 23B and 23C which penetrate the ceiling plates of cubicles 1D and 1E shown in Figure 17, first, cable 2 to which contact pieces 28 and stress cones 6 are not yet fitted is inserted from the left side of T-shaped bushing 23A. Then, as shown by arrow A, the tip of this cable is projected at the right-hand side of T-shaped bushing 23B by moving it to the right.

Next, stress cone 6 is inserted on inner sheath 2b at the right-hand end of projecting cable 2, as shown in Figure 18. Then, connecting piece 28 is inserted on the tip of core wire 2a and wedge 28b is tapped in. In the same way, stress cone 6 is inserted on inner sheath 2b at the left-hand end of cable 2 remaining at the left side to T-shaped bushing 23B, in symmetry with Figure 18, and contact piece 28 is fitted and wedge 28b is tapped in in the same way.

Next, contact piece 28 fitted on the right-hand end of cable 2 is inserted into head 25a of central conductor 25 in T-shaped bushing 23C by moving cable 2 further to the right. Stress cone 6 is inserted into through-hole 23b formed in head 23a of T-shaped bushing 23C and is tightened to head 23a with a tightener (not illustrated).

In the same way, stress cone 6 fitted on the left-hand side of cable 2 is inserted into through-hole 23b formed in head 23a of T-shaped bushing 23B and is tightened to head 23a with a tightener (not illustrated).

In the same way, when connecting cable 2 between cubicles 1B and 1D, cable 2 is thrust through T-shaped bushing 23A from the left of cubicle 1B. The pair of stress cones 6 are fitted symmetrically, contact pieces 28 are fitted to the two ends of cable 2 and wedges 28b are tapped in. After fitting contact plates 28a, the right-hand contact piece 28 is inserted into T-shaped bushing 23B and the left-hand contact piece 28 is inserted into T-shaped bushing 23A. In the same way, stress cones 6 are inserted into the left and right of T-shaped bushings 23A and 23B and tightened.

When inserting stress cone 6 into through-hole 23b of head 23a, the outer periphery of stress cone 6 and the inner periphery of through-hole 23b are cleaned with alcohol and then coated with silicone grease. Insulation caps (not illustrated) are fitted to the right end of T-shaped bushing 23C and the left end of T-shaped bushing 23A.

When delivering the gas-insulated switchgear constructed in this way from the factory, withstand-voltage tests are carried out in accordance with Japan Electric Industries Association Specifications (JEM 1425). After completion of installation on site, prescribed withstand-voltage tests are also carried out in accordance with electric installation technical criteria, before starting operation.

When performing withstand-voltage test of the electrical equipments (not illustrated) inside cubicle 1B shown in Figure 16, electrical equipments (not illustrated) housed in adjacent cubicles are disconnected by removing cable 2 which is inserted in opening 23b formed on the right-hand side of T-shaped bushing 23A shown in Figure 17. A cable connected to the withstand-voltage tester is then connected by inserting it into the core of T-shaped bushing 23A and tightening it. After completing all the withstand-voltage tests in the adjacent panels, the cables are reassembled by connecting the adjacent panels to the T-shaped bushing of cubicle 1B.

Also, in a power distribution facility composed of a row of cubicles in this way, when delivering it after the testing of the assembly in the factory, it is packed in three or four parts, and these are transported to the site in which the power distribution facility is to be installed by large tracks or the like.

Here, let us consider a power distribution facility in which on the right-hand side of cubicle 1E shown in Figure 17, a few cubicles which are connected to T-shaped bushing 23C of cubicle 1E continue, and the right-hand end cubicle is adjacent to the wall of a building. In this case, all cables 2 which connect between the T-shaped bushings of these cubicles must be thrust through head 23a of T-shaped bushing 23A which pierces the ceiling of cubicle 1B on the left-hand end in Figure 17, and then moved to the right in succession.

Also, the fitting of stress cones 6 and contact pieces 28 on cables 2, and the fitting of wedges 28b and contact plates 28a on cables 2, together with the cleaning the inner peripheries of through-holes 23b and the outer peripheries of stress cones 6 must all be carried out on the upper surface of each cubicle, which is at least 2 meters from the surface on which metal closed type switchgear is installed.

In the factory, the connected conductive connectors must be dismantled for transport to the power distribution facility installation site. Stress cones 6 and the inner peripheries of through-holes 23b of T-shaped bushings into which stress cones 6 are to be inserted must be packed to avoid the adherence of dust. Accordingly, these operations have to be carried out twice, once when testing in the factory and once when installing on site.

Next, the detailed construction inside cubicles 1A through 1J will be described.

Figure 19 is a right-hand side elevation showing a gas-insulated switchgear to which prior art conductive connectors are fitted. In Figure 19, a bulkhead 1a which divides a cubicle 1 into back and front is provided vertically slightly in front of the center of cubicle 1 whose outer periphery is surrounded with mild steel plates. A [ shaped divider 1b is mounted on the front side of bulkhead 1a. A reverse "L"-shaped divider 1c is formed on the upper rear side of bulkhead 1a. Furthermore, a divider 1d is provided in the lower rear end of cubicle 1.

As a result, an operating mechanism chamber 40A is formed in front of divider 1b, and a circuit-breaker chamber 40 is formed behind divider 1b. Also, a bus chamber 40B is formed between bulkhead 1a and divider 1c. A power receiving chamber 40C is formed between divider 1c and divider 1d, and a cable chamber 40D is formed behind divider 1d.

Of these, an operating mechanism 41a for a vacuum circuit-breaker 41 is housed at the lower end of operating mechanism chamber 40A, and vacuum circuit-breaker 41 is housed in circuit-breaker chamber 40. The upper pole which projects rearward from the upper part of vacuum circuit-breaker 41 is linked to the front end of an insulated spacer 46A which penetrates the upper part of bulkhead 1a from front to rear. In the same way, the lower pole which projects rearward from the lower part of vacuum circuit-breaker 41 is linked to the front end of an insulated spacer 46B which penetrates the center of bulkhead 1a from front to rear.

T-shaped bushings 23, disclosed in Laid-Open Patent Gazette No. Showa 60-160309 penetrate the ceiling of bus chamber 40B. An isolator 45A, fitted with an earthing facility, is secured to divider 1c in the lower part of bus chamber 40B. A current transformer 44 is secured to the underside of the ceiling plate in front of T-shaped bushing 23. The front terminal of current transformer 44 is linked to a conductor at the rear end of insulated spacer 46A. Also, the rear terminal of current transformer 44 is connected to the front end of isolator 45A mounted to divider 1c. The rear terminal of isolator 45A is connected to the lower end of T-shaped bushing 23.

An isolator 45B, which is fitted with an earthing facility, is secured vertically on the lower part of the rear face of bulkhead 1a in power receiving chamber 40C. The upper end of isolater 45B is connected by a conductor to the rear end of insulated spacer 46B. A lightening arrester 48 vertically penetrates and is hermetically sealed into the ceiling of cubicle 1 in the rear part of power receiving chamber 40C. The lower end of an isolator rod 48a which projects downward from the lower end of lightening arrester 48 is linked to the upper end of a bushing 49 which is fitted vertically in the center of divider 1d.

The upper terminal of bushing 49 is connected to the lower terminal of isolator 45B through a conductor 47 which is supported top and bottom by an insulator 49B mounted on the rear of divider 1c and an insulator 49C mounted on the floor of cubicle 1.

Bushing 49 is connected to the upper end of a cable head 50 fitted vertically in the center part of divider 1d. A cable head 50 is connected to the upper end of a high-voltage bridging polyethylene cable 51 which rises from a pit formed on the floor on which cubicle 1 is installed.

SF₆ gas is sealed as an insulating gas into circuit-breaker chamber 40, bus chamber 40B and power receiving chamber 40C. Other cubicles are linked to the sides of cubicle 1, as shown in Figure 16. T-shaped bushings 23 shown in Figure 19 also penetrate the ceilings of these cubicles. High-voltage bridging polyethylene cables are connected between these T-shaped bushings 43, as shown in Figure 16.

However, when delivering the gas-insulated switchgear constructed in this way from the factory, withstand-voltage tests of the switchgear are carried out in accordance with Japan Electric Industries Association Specifications (JEM 1425). After completion of installation of the switchgear on site, prescribed withstand-voltage tests of the switchgear are also carried out in accordance with electric installation technical criteria, before starting operation of it.

Figure 20 is a drawing showing the method of connecting T-shaped bushing 23 in the ceiling of cubicle 1 to a test transformer (not illustrated) when performing the above-described withstand-voltage test. In Figure 20, a compression terminal 54a is mounted on a terminal processing unit 54 of the right-hand end of a cable 55. The left-hand end of cable 55 is thrust through a protective tube 53. A truncated cone-shaped rubber insulating layer 52 is fitted to the left-hand side of a flange 53a on the left end of protective tube 53. A ring shaped contact ring 56 is fitted to the core wire which is exposed at the left-hand end of cable 55.

When performing a withstand-voltage test of the electrical equipments inside cubicle 1 shown in Figure 19, electrical equipments housed in adjacent cubicles (not illustrated) are disconnected by removing a cable (not illustrated) which is inserted in an opening 23a formed on the left-hand side of T-shaped bushing 23 shown in Figure 20. An insulation cap (not illustrated) inserted in opening 23a on the right-hand side is then removed. After fitting this insulation cap in opening 23a on the left-hand side, connecting ring 56 at the left-hand end of cable 55 is inserted in the core of T-shaped bushing 23, and is connected to the core of T-shaped bushing 23 by tightening flange 53a to the right-hand surface of the T-shaped bushing 23. Then the withstand-voltage test of the electrical equipments is performed.

After completing the withstand-voltage test, cable 55 is disconnected from T-shaped bushing 23. Then the insulation cap is removed and reassembled on the right-hand side of T-shaped bushing 23. When all the withstand-voltage tests on adjacent cubicles (not illustrated) have been completed, the cables (not illustrated) which connect adjacent cubicles with the T-shaped bushing of cubicle 1 are assembled.

However, in conductive connectors composed in this way, the disconnection of the insulation cap and the cable connecting adjacent cubicles and the connection of cable 55, and restoration to their original states after completion of testing, all take much time.

That is to say, when the right-hand side insulation cap is assembled in left-hand side opening 23a, and when assembling insulating layer 52 of the left-hand end of cable 55 in right-hand side opening 23a, left and right openings 23a and the insertion parts of the insulation caps, together with the surface of rubber insulating layer 52 must be cleaned with alcohol in order to prevent reduction of reliability of the withstand-voltage test due to the adhesion of dust. Moreover, these surfaces must be coated with silicone grease. Also, the presser piece (not illustrated) assembled inside protective tube 53 must be adjusted so that the silicone grease-coated surfaces of the insulation cap and rubber insulating layer 52 are uniformly pressed into the inner periphery of openings 23a with the prescribed pressure.

Moreover, since cable 55 is liable to be long and heavy, not only does the operation of connecting it between the upper part of cubicle 1 and the terminal of the test transformer require considerable effort, but the work on the upper surface of cubicle 1 involves work at height.

An object of the present invention is to provide an improved connector, conveniently for connecting conductors for multi-cubicle switchgear.

Accordingly, the present invention provides a connector for making a connection between at least one cable which runs generally parallel to the wall of a switchgear housing, and the interior of the housing, the connector comprising a lower bushing which is adapted to fit in an aperture of the wall of the housing and comprises a semi-tubular lower electrode and has an axially extending conductor member, an upper bushing comprising a semi-tubular upper electrode which extends at right angles to the said conductor member, both electrodes complementing each other to surround the cable and to make contact with it so as to make an electrical connection to the conductor member and tightening means for clamping the cable within the upper and lower bushings;
wherein the upper bushing is detachable to release the cable.

According to one aspect of this invention, there is provided a conductive connector for a switchgear with a plurality of cubicles including a lower bushing. The lower bushing includes a first T-shaped insulating layer having a head provided with a first semi-tubular groove in a direction orthogonal to a central axis thereof, a first central conductor buried in the first T-shaped insulating layer along the central axis, and a lower electrode in the form of a semi-tube, positioned in the first semi-tubular groove of the head of the first T-shaped insulating layer in a direction orthogonal to the first central conductor and electrically connected to the first central conductor. The conductive conductor further includes an upper bushing including, a second insulating layer provided facing the head of the lower bushing, having a bottom provided with a second semi-tubular groove in the direction orthogonal to the central axis of the first T-shaped insulating layer to form a through hole together with the head of the first T-shaped insulating layer, and a second central conductor buried in the second insulating layer along the same axis line as that of the first central conductor. The conductive connector also includes a presser electrode in the form of the semi-tube, electrically connected to the second central conductor, positioned in the second semi-tubular groove of the bottom of the upper bushing and provided facing the lower electrode to form a tubular electrode together with the lower electrode in the through hole, and tightening members for pressing the upper bushing and the presser electrode on to a facing surface of the lower bushing.

According to still another aspect of this invention, there is provided a conductive connector for a switchgear with a plurality of cashings including a lower bushing, including, a first T-shaped insulating layer having a head provided with a plurality of first semi-tubular grooves, each being in a direction orthogonal to a plurality of central axes thereof, respectively, a plurality of first central conductors, each being buried in the first T-shaped insulating layer along one of the central axes, respectively, and a plurality of lower electrodes, each being in the form of a semi-tube, positioned in one of the first semi-tubular grooves of the head of the first T-shaped insulating layer in a direction orthogonal to one of the first central conductors and electrically connected to one of the first central conductors, respectively. The conductive connector further includes a plurality of upper bushings, each including a second insulating layer provided facing the head of the lower bushing, having a bottom provided with a second semi-tubular groove in the direction orthogonal to one of the central axes of the first T-shaped insulating layer to form a through hole together with the head of the first T-shaped insulating layer, and a plurality of second central conductors, each being buried in one of the second insulating layers along the same axis line as that of one of the first central conductors, respectively. The conductive connector also includes a plurality of presser electrodes, each being in the form of the semi-tube, electrically connected to one of the second central conductors, positioned in one of the second semi-tubular grooves of the bottoms of the upper bushings and provided facing the lower electrode to form a tubular electrode together with one of the lower electrodes in one of the through holes, respectively, and tightening members for pressing the upper bushings and the presser electrode on to a facing surface of the lower bushing.

According to another aspect of this invention, there is further provided a conductive connector for a switchgear with a plurality of cubicles, including a male bushing and a female bushing. The male bushing includes a first insulating layer having a first projection and a first head provided with a first through hole in at least one side of the first insulating layer in a direction orthogonal to a first central axis of the projection, and a first central conductor buried in the first insulating layer. The first central conductor has a second projection buried in the first projection of the first insulating layer along the first central axis and a second head provided with a second through hole in at least one side of the second head of the first central conductor in the direction and on the same axial line as that of the first through hole. A first end of the second projection is electrically connected to the second head, and a second end of the second projection projects from an end of the first projection of the first insulating layer. A female bushing includes a second insulating layer provided on an outer wall of the cubicle having a depression in which the first projection of said first insulating layer engages, and a second central conductor buried in the second insulating layer. The second central conductor has a first end provided at the depression of the second insulating layer, engages the second end of the second projection of the first central conductor. Whereby the first central conductor is electrically connected to the second central conductor. And whereby a connecting conductor for connecting the two cubicles of the switchgear is inserted in the first and second through holes and an end of the connecting conductor is engaged with the first central conductor to electrically connect the connecting conductor and the first central conductor.

According to still another aspect of this invention, there is provided a conductive connector for a switchgear with a plurality of cubicles, including a female bushing and a male bushing. The female bushing includes a first insulating layer having a depression and a first head provided with a first through hole in at least one side of the first insulating layer in a direction orthogonal to a first central axis of the first insulating layer, and a first central conductor buried in the first insulating layer. The first central conductor has an end provided at the depression of the first insulating layer and a second head provided with a second through hole in at least one side of the second head of the first central conductor in the direction and on the same axial line as that of the first through hole. The end of the first central conductor is electrically connected to the second head. A male bushing includes a second insulating layer provided on an outer wall of the cubicle having a first projection which engages in the depression of the first insulating layer, and a second central conductor buried in the second insulating layer. The second central conductor has a second projection buried in the first projection of the second insulating layer along a second central axis of the second insulating layer which is the same axial line as that of the first central axis. One end provided at the second projection of the second insulating layer engages the end of the first central conductor. Whereby the first central conductor is electrically connected to the second central conductor. And whereby a connecting conductor for connecting the two cubicles of the switchgear is inserted in the first and second through holes and an end of the connecting conductor is engaged with the first central conductor to electrically connect the connecting conductor and the first central conductor.

### BRIEF DESCRIPTION OF THE DRAWINGS

A more complete appreciation of the invention and many of the attendant advantages thereof will be readily obtained at the same becomes better understood by reference to the following detailed description when considered in connection with the accompanying drawings, wherein:
Figure 1 is a partial vertical cross-section showing a conductive connector for a switchgear according to an embodiment of this invention;
Figure 2 is a partial vertical cross-section showing a conductive connector for a switchgear according to another embodiment of this invention;
Figure 3 is a partial vertical cross-section showing a conductive connector for a switchgear according to still another embodiment of this invention;
Figure 4 is partial vertical cross-section showing a conductive connector for a switchgear according to another embodiment of this invention;
Figure 5 is a partial vertical cross-section showing a conductive connector for a switchgear according to still another embodiment of this invention;
Figure 6 is a view showing the detailed construction of the parts shown in Figure 1;
Figure 7 is a front elevation showing a conductive connector for a switchgear according to an embodiment of this invention;
Figure 8 is a cross-section of Figure 7 along A - A;
Figure 9 is a front elevation showing a conductive connector for a switchgear according to an embodiment of this invention;
Figure 10 is a right-hand side elevation of Figure 9;
Figure 11 is a right-hand side elevation showing conductive connectors for a switchgear according to other embodiments of this invention;
Figure 12 is a partial vertical cross-section showing a conductive connector for a switchgear according to an embodiment of this invention;
Figure 13 is a partial vertical cross-section showing another parts of the conductive connector shown in Figure 12;
Figure 14 is a partial vertical cross-section showing a conductive connector for a switchgear according to another embodiment of this invention;
Figure 15 is a partial vertical cross-section showing another parts of the conductive connector shown in Figure 14;
Figure 16 is an oblique view showing a power distribution panel in which prior art conductive connectors for switchgear are assembled;
Figure 17 is a vertical cross-section showing the assembly process for prior art switchgear conductive connectors shown in Figure 16;
Figure 18 is a partial enlargement of Figure 17;
Figure 19 is a right-hand side elevation of an example of switchgear in which a prior art conductive connector is mounted; and
Figure 20 is a drawing showing the operation of the prior art conductive connector.

### DETAILED DESCRIPTION OF THE PREFERRED EMBODIMENTS

Referring now to the drawings, wherein like reference numerals designate identical or corresponding parts throughout the several views, the embodiments of this invention will be described below.

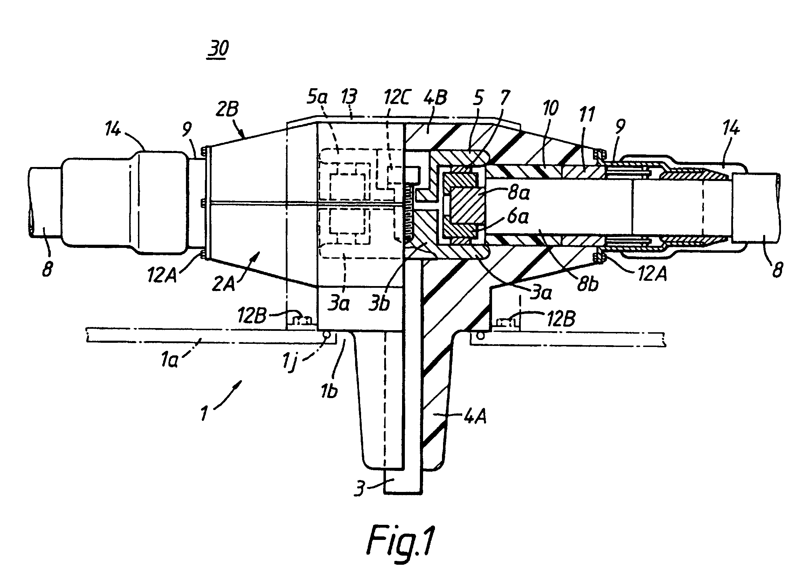

Figure 1 is a partial vertical cross-section showing a conductive connector for a switchgear according to an embodiment of this invention when the switchgear is in an operational state.

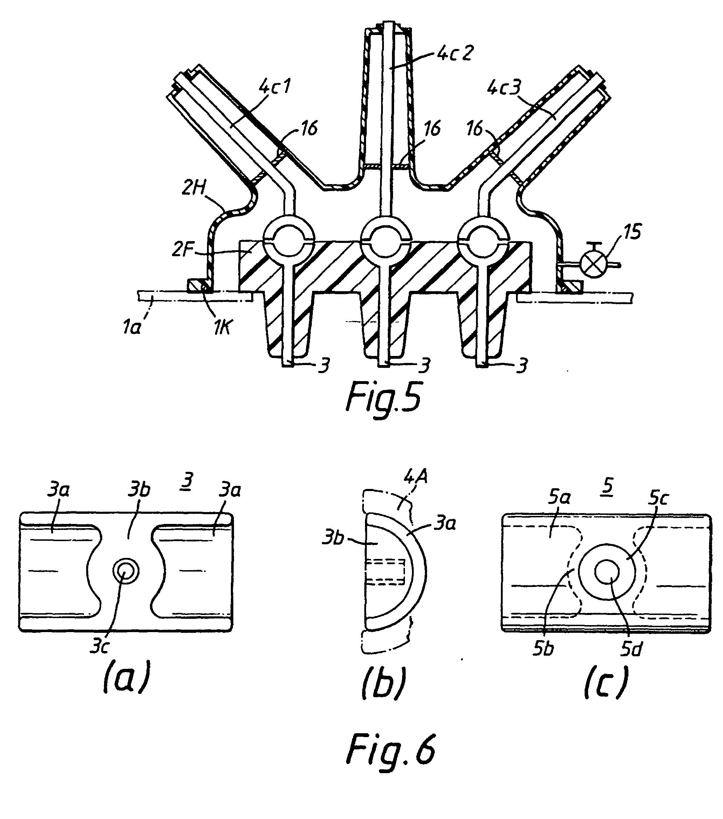

In Figure 1, a T-shaped bushing of this embodiment is constructed with a lower bushing 2A and an upper bushing 2B. The outer periphery of a roughly T-shaped central conductor 3 is coated with epoxy resin insulating layer 4A to form lower bushing 2A. As shown in Figure 1 and Figure 6(a) showing the partial horizontal cross-section of Figure 1, a boss 3b is formed at the upper end of central conductor 3. Also, as shown in Figure 1, Figure 6(a) and Figure 6(b) which shows partial right side elevation of Figure 1, trough shaped electrodes 3a are formed symmetrically to the left and right of the base end of boss 3b.

Also, insulating layer 4A is half-moon shaped, cross-section as shown by the single-dot chain line in Figure 6(b), so that if forms a full circle in combination with an insulating layer 4B, which is described in detail later and is shown above insulating layer 4A. That is to say, they are formed so that they become the same shape as the T-shaped bushing disclosed in Laid-Open Patent Gazette No. Showa 60-160309. As shown in Figure 6, a female-threaded hole 3c is formed in the center of boss 3b. Insulating layer 4B, which is mounted on the upper surface of insulating layer 4A, is formed symmetrical to the upper part of insulating layer 4A. An earthing layer (not illustrated) is formed on the outer periphery of insulating layer 4B. Upper bushing 2B is formed by this earthing layer and insulating layer 4B.

The ends of a pair of high-voltage bridging polyethylene cables (hereafter, simply "cables") 8, from which the outer sheaths have been peeled, are mounted in the left and right upper ends of insulating layer 4A. Ringshaped insulating rubbers 10 are fitted beforehand on the leading ends of the outer peripheries of inner sheaths 8b of these cables 8. In the same way, ring-shaped semi-conductive rubbers 11 are fitted beforehand on the outer sides of these insulating rubbers 10.

Roughly ring-shaped connecting rings 6a are fitted beforehand on core wires 8a which are exposed at the leading edges of cables 8 and wedges (not illustrated) are tapped in at the end surfaces of core wires 8a. Contact pieces 7 made of conductive spring material are fitted in ring shapes on the outer peripheries of connecting rings 6a. Presser electrode 5, shown in Figure 1 and in Figure 6(c) showing a partial plan of Figure 1, is mounted on the upper surfaces of contact pieces 7.

In presser electrode 5, trough-shaped electrodes 5a are formed to left and right in symmetry to electrodes 3a. In the center of presser electrode 5, a boss 5b, which projects downward, is formed in symmetry to boss 3b. In boss 3b, a depression 5c is formed in the upper surface, and in the center of depression 5c, a through-hole 5d is formed which penetrates from top to bottom.

A bolt 12C is inserted into through-hole 5d from above, and the threaded portion of bolt 12C engages in a female-threaded hole 3d which is provided at the upper end of -central conductor 3. Presser electrode 5 is tightened on to central conductor 3 using bolt 12C. As a result, core wires 8a, together with contact rings 6 and contact pieces 7, are tightened by upper presser electrode 5 and lower electrodes 3a.

As shown by the single-dot chain line but not illustrated in side elevation, a roughly Ω shaped presser metal piece 13 is mounted on insulating layer 4B from above. The lower ends of presser metal piece 13 are secured to ceiling plate 1a of cubicle 1 with bolts 12B. In ceiling plate 1a, O-ring 1j is mounted on the upper surface round the outer periphery of through-hole 1b provided in ceiling plate 1a. The lower part of insulating layer 4A penetrates into through-hole 1b.

Tubular fixing metal pieces 9 are fitted beforehand on cables 8. These fixing metal pieces 9 are secured to the side surfaces of upper and lower insulating layers 4A and 4B with bolts 12A. Seals 14 are provided on the outer surfaces of fixing metal pieces 9 and the peeled portions of the outer sheaths of cables 8. An earthing layer (not illustrated) is provided beforehand on the outer periphery of the portion of insulating layer 4A which projects above ceiling plate 1a, in the same way so for the outer periphery of insulating layer 4B.

In the conductive connector constructed in this way, central conductor 3 of cubicle 1 is connected to the T-shaped bushings (not illustrated) which penetrate the ceilings of the switchgear cubicles (not illustrated) adjacent to the left and right of cubicle 1 by left- and right-hand cables 8. Also, the lower end of the central conductor 3 is similarly connected to the vacuum circuit-breaker, etc., inside cubicle 1 through an isolator (not illustrated) housed inside cubicle 1.

Also, when a switchgear in which the cubicles penetrated by T-shaped bushings constructed in this way are arranged in a row as shown in Figure 16 is divided into 3 - 4 parts for transport, upper bushing 2B is dismantled by removing seals 14 shown in Figure 1, slackening bolts 12A and sliding left and right fixing metal pieces 9 to the outer sheath sides of cables 8. Then, cables 8 are removed from lower bushing 2A by releasing presser electrode 5.

When performing the withstand-voltage tests for each cubicle also, upper bushing 2B is dismantled and presser electrode 5 is released. Then, cables 8 are disconnected. Thus, contact between cables 8 and lower bushing 2A is broken and the tests can be carried out.

Furthermore, in a power distribution facility in which cubicles are arranged in a row as shown in Figure 16, when connecting cables to the divided cubicles after installation also, there is no need to pass the cables in sequence from the T-shaped bushing mounted on cubicle 1A at the left-hand end to the T-shaped bushing mounted on cubicle 1J at the right-hand end, as described above. Therefore, the time taken for installation can be reduced. Also, the problem of dust penetrating inside the upper and lower bushings during the installation work can be solved.

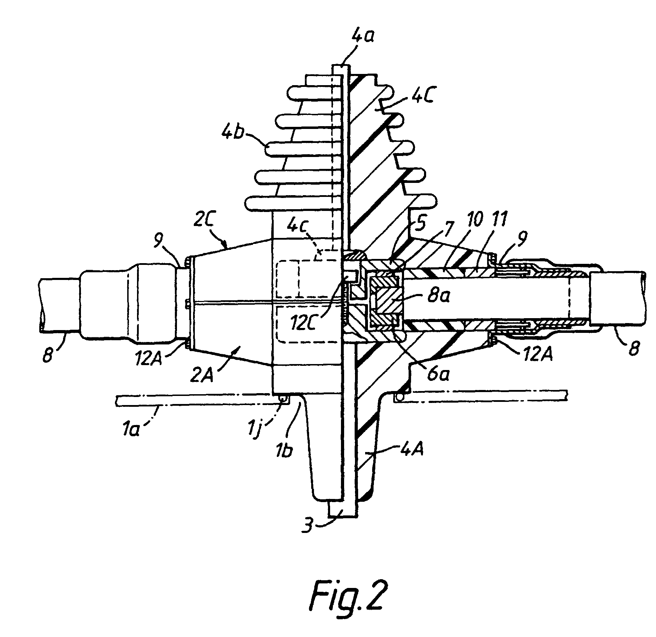

Next, Figure 2 is a partial vertical cross-section showing a conductive connector according to another embodiment of this invention. This shows a T-shaped bushing 23 when performing a withstand-voltage test between the electrical equipments and the conductors inside cubicle 1, which is penetrated by T-shaped bushing 23 composed as shown in Figure 1, and the cubicle 1. Figure 2 shows the state in which upper insulated bushing 2B shown in Figure 1 has been removed and a reverse T-shaped upper insulated bushing 2C has been assembled.

In Figure 2, the lower part of upper insulated bushing 2C is constructed the same as upper insulated bushing 2B shown in Figure 1. For the upper part of upper insulated bushing 2C, roughly truncated cone-shaped epoxy resin insulating layer 4C is formed above the center of upper insulated bushing 2B. Multiple ribs 4b are formed on the outer periphery of insulating layer 4C. Small diameter central conductor 4a is buried in the core of insulating layer 4C. Arc-shaped (when seen in the side elevation which is not illustrated) contact 4c is formed at the lower end of central conductor 4a. The lower surface of contact 4c butts against the upper surface of presser electrode 5.

In this case, roughly Ω shaped (when seen in the side elevation which is not illustrated) presser metal piece, in the center of the upper end of which a through-hole is formed, is fitted to upper insulated bushing 2C from above in a similar way to Figure 1. By securing the lower ends of this presser metal piece to ceiling 1a, upper insulated bushing 2C is pressed on to lower insulated bushing 2A. Through this pressure, contact 4c at the lower end of central conductor 4a is pressed on to the upper surface of presser electrode 5.

When measuring the withstand-voltage values between the electrical equipments and the conductors inside cubicle 1, and the cubicle 1, the end of the cable connected to the test transformer (not illustrated) is connected to the upper end of central conductor 4a. In a conductive connector composed in this way, when packing for delivery, it is delivered packed in the state shown in Figure 1, and it is re-assembled as shown in Figure 2 after installation at the installation site. However, at this time, upper insulated bushing 2C and be assembled by only removing bolts 12A which tighten fixing metal pieces 9 on the left and right of upper insulated bushing 2B, without removing cables 8. Therefore, the withstand-voltage test can be performed in a short time.

In the above embodiments when the rated voltage of the switchgear is low and the rated short duration withstand-current value is also low, and thus when the opening width of cubicle 1 is narrow and the lengths of cables 8 are short, the fixing of fixing metal pieces 9 to the upper and lower bushings need not be by means of bolts 12A. The fixing may be performed by forming multiple depressions in the outer peripheries of insulating layers 4A, 4b and 4C, and engaging the fixing sides of fixing metal pieces 9 in these depressions.

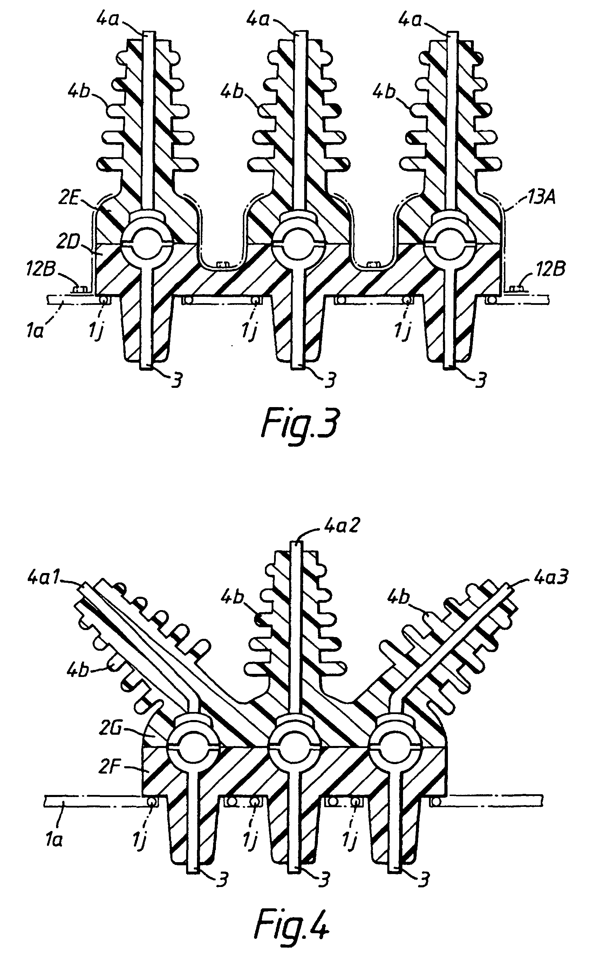

Next, Figure 3 is a partial vertical cross-section showing a conductive connector according to still another embodiment of this invention. This shows the case when the T-shaped bushing shown in Figure 2 is used for 3-phase, in which an upper insulated bushing 2E is constructed the same as upper insulated bushing 2C, and the main part of the respective one phase portion of a lower insulated bushing 2D is constructed the same as lower insulated bushing 2A. In this case, upper insulated bushings 2E are secured to ceiling plate 1a together with lower insulated bushing 2D by a gabled fixing piece shown by the single-dot chain line.

Also, Figure 4 is a partial vertical cross-section showing a conductive connector according to another embodiment of this invention. This is suitable for the case when the rated voltage of the switchgear to which the conductive connector shown in Figure 3 is assembled is high. It shows the case where the insulating layers of an upper insulated bushing 2G and central conductors 4a1, 4a2 and 4a3 are formed in a radial state, and a lower insulated bushing 2F has the same-construction as-lower insulated bushing 2D.

Figure 5 is a partial cross-section showing a conductive connector according to still another embodiment of this invention. This shows the case of a gas-insulated conductive connector. In this case, an upper insulated bushing 2H, of which the hollow portions are formed in a radial state, is provided on the upper part of lower insulated bushing 2F shown in Figure 4. Insulated bushing 2H is hermetically secured to ceiling plate 1a via O-ring 1k fitted to its lower end.

Central conductors 4c1, 4c2 and 4c3 are fitted inside upper insulated bushing 2H. The mid-sections of central conductors 4c1, 4c2 and 4c3 are supported by spacers 16. Their lower end surfaces are spherically processed and are covered with nickel plating in order to prevent increase of contact resistance due to oxidation. Also, in Figure 5, a pneumatic valve 15 penetrates the lower part of the right-hand side of upper insulated bushing 2H.

In this case, SF₆ gas is sealed inside upper insulated bushing 2H from pneumatic valve 15. As a result, this can be used at higher voltages and can be made lighter than the conductive connectors shown in Figures 3 and 4.

According to another embodiment of this invention, in the conductive connectors shown in Figures 3, 4 and 5 the 3 central conductors may be arranged so that they are positioned at the apexes of an equilateral triangle, which is not illustrated by a plan view. In this case, the spacings between central conductors can be made narrower.

Also, an example in which the lower ends of central conductors 4c1, 4c2 and 4c3 are spherically processed and butt against the upper surfaces of central conductors 3 is illustrated in Figure 5. However, the force applied to the leading edges of the radially-shaped hollow parts may be reduced by cutting off the lower ends of central conductors 4c1, 4c2 and 4c3, connecting belt-shaped contact plates made of conductive spring material, and causing the lower ends of these contact plates to make sliding contact with (wipe) the upper surfaces of central conductors 3.

Furthermore, in the above embodiments each connective conductor is described for the case of penetrating the ceiling plate of switchgear cubicle 1. However, they may also penetrate cubicle 1 at a side surface.

According to these embodiments of this invention, a conductive connector for a switchgear can be obtained which enables simple connection between cubicles of the switchgear and also enables the simple performance of withstand-voltage tests.

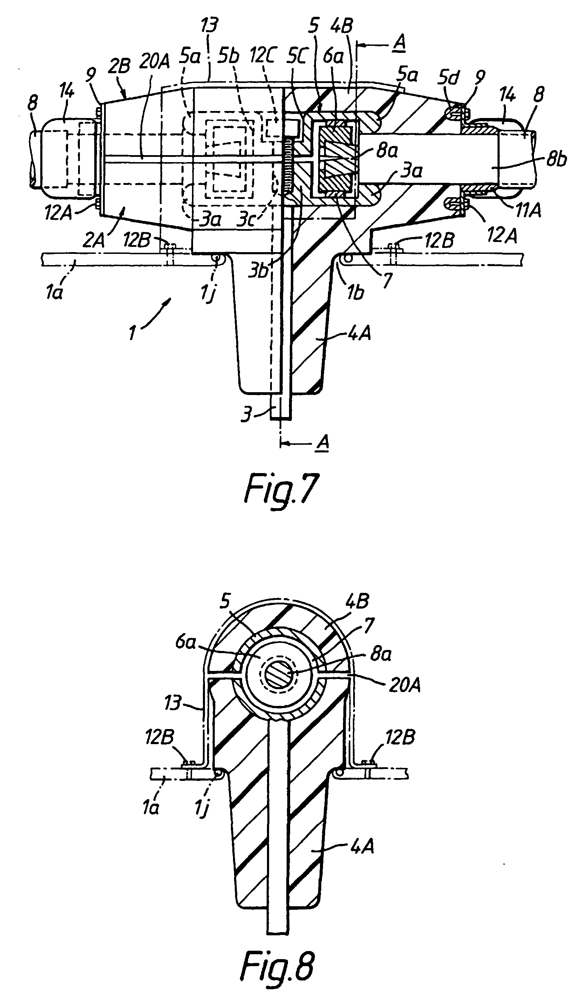

Figure 7 is a partial vertical cross-section showing a conductive connector of a switchgear according to an embodiment of this invention, and shows the state when it is mounted on switchgear cubicle 1. In Figure 7, T-shaped bushing 23 is constructed with lower bushing 2A and upper bushing 2B as in the embodiment of Figure 1. Hereinafter, this embodiment will be described mainly with respect the construction thereof which is different from that of the embodiment shown in Figure 1.

The upper end surface of insulating layer 4A is half-moon shaped, as shown in Figure 8 which shows a cross-section of Figure 7 along the line A - A, so that it forms a full circle in combination with insulating layer 4B of upper bushing 2B via a small gap. That is to say, they are formed so that they become the same shape as the T-shaped bushing disclosed in Laid-Open Patent Gazette No. Showa 60-160309. Silicone gel sheets 20A (described later) are inserted between the upper end surfaces of insulating layer 4A and the lower end surfaces of insulating layer 4B, as shown in Figure 8.

The silicone gel used for this silicone gel sheets 20A is hardened by the addition reaction of a liquid silicone polymer with a bridging density of 1/5 - 1/10 times that of a general silicone elastomer, and exhibits a gel state even after hardening. Also, when producing the silicone gel sheet, unhardened silicone get TSE-3063 (product name, produced by Toshiba Silicone, K.K.) is injected into a vessel made of polytetrafluoroethylene in which shallow U-shaped grooves are formed, under a reduced pressure of 10mm Hg. It is then hardened to a gel state of 1.5 mm thickness by leaving it for 1 day at a room temperature of 25 °C.

The ends of a pair of high-voltage bridging polyethylene cables (hereafter, simply "cables") 8, from which the outer sheaths have been peeled, are mounted in the left and right upper ends of insulating layer 4A. Ringshaped semi-conductive rubbers 11A are fitted beforehand on the outer peripheries of the base ends of inner sheaths 8b of these cables 8.

Roughly ring-shaped connecting rings 6A are fitted beforehand on core wires 8a which are exposed at the leading edges of cables 8, and wedges are tapped in at the end surfaces of core wires 8a. Contact pieces 7 made of conductive spring material are fitted in ring shapes on the outer peripheries of connecting rings 6A. Presser electrode 5, in which depression 5b is formed in the central upper part thereof, is placed in symmetry with the upper end of central conductor 3 on the upper surfaces of contact pieces 7. The lower end of presser electrode 5 faces the upper end of central conductor 3 with a narrow gap between.

Tubular fixing metal pieces 9 are fitted beforehand on cables 8. These fixing metal pieces 9 are secured to the side surfaces of upper and lower insulating layers 4A and 4B with bolts 12A via filler metal 5d. Seals 14 are provided on the outer surfaces of fixing metal pieces 9 and the peeled portions of the outer sheaths of cables 8. An earthing layer (not illustrated) is provided beforehand on the outer periphery of the portion of insulating layer 4A which projects above ceiling plate 1a, in the same way as for the outer periphery of insulating layer 4B.

In the conductive connector constructed in this way, central conductor 3 of cubicle 1 is connected to the T-shaped bushings (not illustrated) which penetrate the ceilings of the switchgear cubicles (not illustrated) adjacent to the left and right of cubicle 1 by left- and right-hand cables 8. Also, the lower end of central conductor 3 is similarly connected to the vacuum circuit-breaker, etc., inside cubicle 1 through an isolator (not illustrated) housed inside cubicle 1.

Since the silicone gel has flexibility, the engaged portions of the T-shaped bushing into which silicone gel sheets 20A are inserted in this way between the butted surfaces of the upper end surfaces of insulating layer 4A and the lower end surfaces of insulating layer 4B, except the portions of presser electrode 5 and electrodes 3a, fit thoroughly together. Thus the mixing of air in the void in the engaged portions can be prevented. For this reason, even when a test voltage of 30KV was applied, partial discharges could not be detected by a corona tester which had a 10 pc (pico coulomb) detection sensitivity. Also, although some of the ten T-shaped bushings presented for test did not have a high accuracy of parallelism in their butted surfaces, no partial discharges were detected for the impression of the above test voltage.

After completion of the corona test, a heat cycle test by load current was performed (Note: A temperature rise value of 90 °C for 8H, then stopping the passing of current for 12 H; 30 times), and then a colour-check liquid was sprayed. After this, the state of penetration was inspected by cutting, but no penetration of the colour-check liquid was observed. In this test, no significant difference between the T-shaped bushing of this embodiment and an undivided prior art T-shaped bushing was observed.

Also, when a switchgear in which the cubicles penetrated by T-shaped bushings constructed in this way are arranged in a row as shown in Figure 16 is divided into 3 - 4 parts for transport, upper bushing 2B is dismantled by removing seals 14 shown in Figure 7, slackening bolts 12A and sliding left and right fixing metal pieces 9 to the outer sheath sides of cables 8. Then, cables 8 are removed from lower bushing 2A by releasing presser electrode 5.

When performing the withstand-voltage tests for each cubicle also, upper bushing 2B is dismantled and presser electrode 5 is released. Then, cables 8 are disconnected. Thus, contact between cables 8 and lower bushing 2A is broken and the tests can be carried out.

Furthermore, in a power distribution facility in which cubicles are arranged in a row as shown in Figure 16, when connecting cables to the divided cubicles after installation also, there is no need to pass the cables in sequence from the T-shaped bushing mounted on cubicle 1A at the left-hand end to the T-shaped bushing mounted on cubicle 1J at the right-hand end, as described above. Therefore, the time taken for installation can be reduced. Also, the problem of dust penetrating inside the upper and lower bushings during the installation work can be solved.

In another embodiment, rubber sheets with a good insulation property may be inserted which are coated with unhardened silicone gel, instead of silicone gel sheets 20A in the above embodiment.

Furthermore, instead of silicone gel sheets 20A in the above embodiment, sheets made of unhardened silicone compound may be employed.

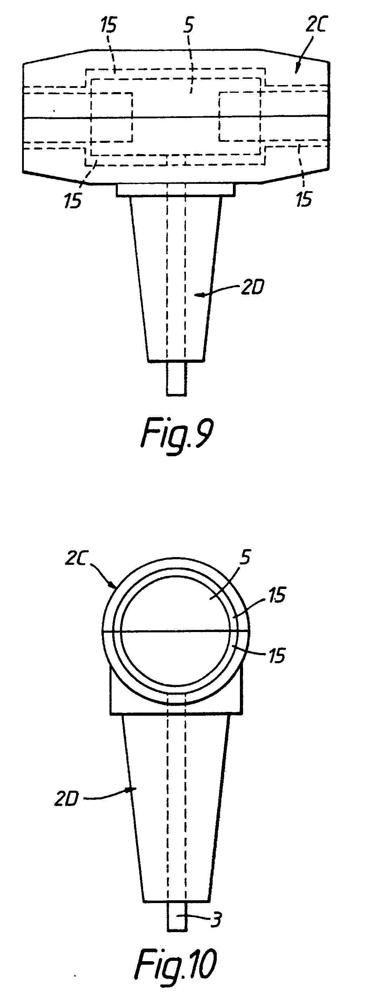

Next, Figure 9 is a front elevation showing a conductive connector according to another embodiment of this invention, and corresponds to Figure 7. Figure 10 is a side elevation of Figure 9 and corresponds to Figure 8. Where the detailed parts are the same in Figure 7 and Figure 8, they have been omitted.

In Figures 9 and 10, silicone gel layers 15 are formed between the insulating layer of upper bushing 2C and presser electrode 5, between the insulating layer of lower bushing 2D and the upper outer periphery of central conductor 3, and also on the superimposed portions of the inner peripheries of the left and right trough-shaped portions of upper bushing 2C and lower bushing 2D. More increased operational cabapility and insulation capability in the conductive connector according to this embodiment have been attained than the embodiment shown in Figure 7.

In this case also, in the same way as with the T-shaped bushing illustrated in Figures 7 and 8, the connection of cables and withstand-voltage tests after assembly of the T-shaped bushing to the cubicle can be simply performed by removing upper bushing 2C upward.

In the T-shaped bushing illustrated in Figures 7, 8, 9 and 10, the upper and lower insulating layers have been described using the example of epoxy resin. However, according to another embodiment, T-shaped bushing may be provided by making one of the upper and lower insulating layers of silicone rubber, and sandwiching silicone gel between the facing surfaces of this silicone rubber and the epoxy resin of the other side. Also, as shown in Figures 9 and 10, silicone gel may also be formed on the outer periphery of the central charging portion and the left and right trough-shaped portions, or it may be formed only on the silicone rubber side.

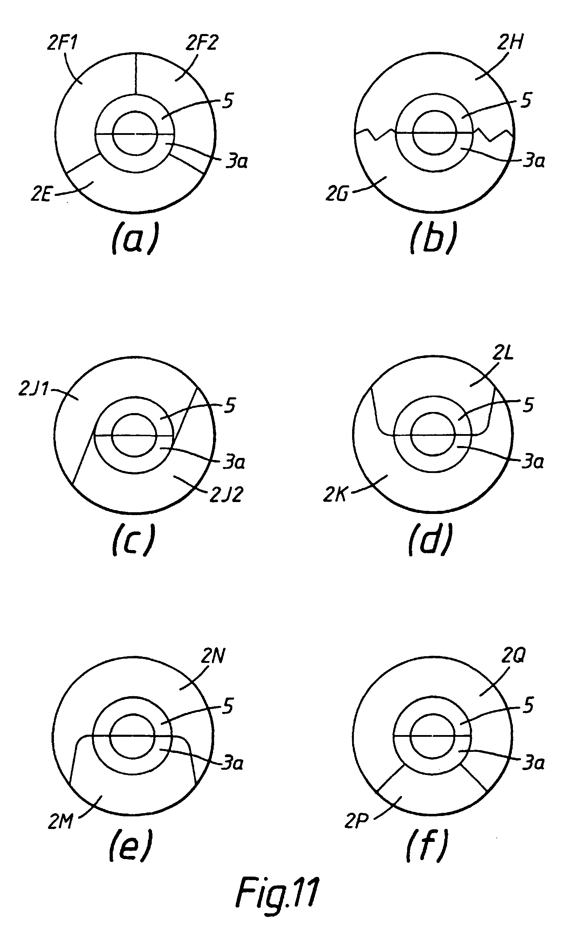

Next, Figure 11 is right-hand side elevations showing other embodiments of the T-shaped bushings shown in Figures 7 to 10. These show cases when varying the number of divisions of the head and their positions and directions. Of these, (a) shows an example of three divisions of lower bushing 2E, one side upper bushing 2F1 and the other side upper bushing 2F2. (b) shows an example of increasing the creeping distance of the insulation by corrugating the facing surfaces of the divided portions of lower bushing 2G and upper bushing 2H. (c) is an example of increasing the creeping distance by slanting the dividing surfaces of lower bushing 2J2 and upper bushing 2J1. (d) is an example of increasing the creeping distance by curving the dividing surfaces of lower bushing 2K and upper bushing 2L. (e) is an example of reversing the upper and lower parts of example (d) to make lower bushing 2M and upper bushing 2N. (f) is an example of making the insulating layer of lower bushing 2P 90° and the insulating layer of upper bushing 2Q 270°.

According to these embodiments of this invention shown in Figures 7 - 11, a conductive connector for a switchgear can be obtained which enables simple connection between cubicles of the switchgear and also enables the simple performance of withstand-voltage tests.

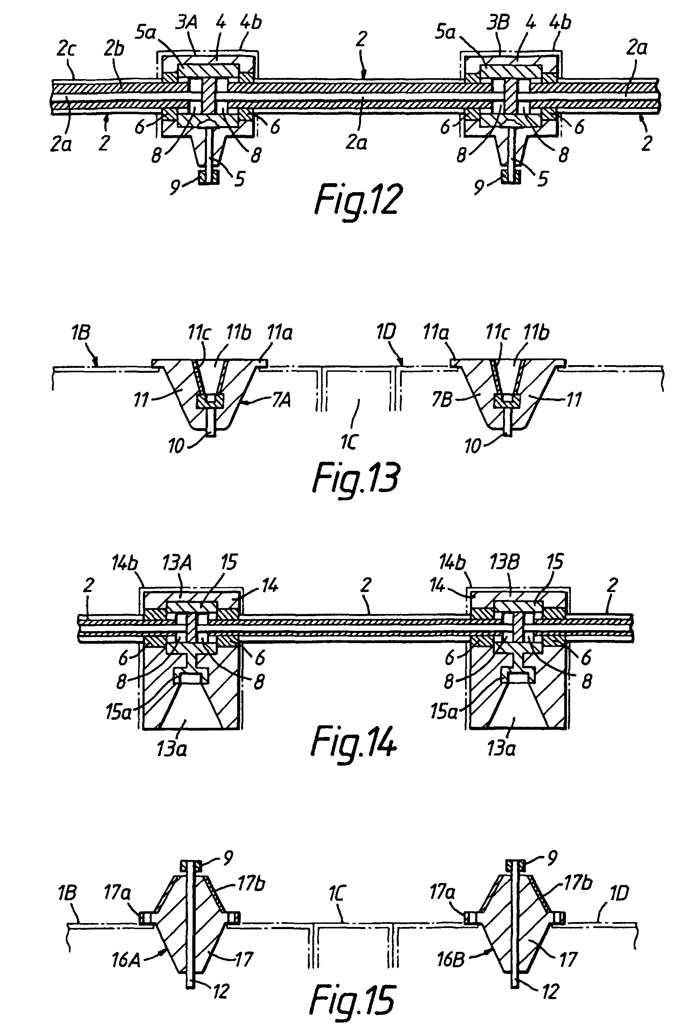

Figures 12 and 13 show a conductive connector according to an embodiment of this invention, and show the states immediately before connecting between cubicles 1B and 1D. Of these, Figure 12 is a vertical cross-section showing the state in which male T-shaped bushings 3A and 3B are assembled and cable 2 is connected in the factory.

In Figure 12, T-shaped bushings 3A and 3B are formed by injection-moulding epoxy resin insulating layers 4 on the outer peripheries of roughly T-shaped central conductors 5. Through-holes which penetrate from left to right are formed in the heads of insulating layers 4. Cylindrical heads 5a are formed on the upper parts of central conductors 5, and earthing layers 4b are formed on the outer peripheries of insulating layers 4. Contact pieces 9, which are of similar shape to contact pieces 8, which is described later, are fitted to the lower ends of central conductors 5 which project from the lower ends of insulating layers 4. Ringshaped contact plates made of conductive spring material are fitted on the outer peripheries of contact pieces 9.

Cables 2 are inserted into T-shaped bushings 3A and 3B from both sides. Contact pieces 8 which are the same shape as that of contact piece 28, together with wedges and contact plates (not illustrated) are fitted on the ends of core wires 2a at the ends of cables 2 in the same way as for the prior art cable connectors shown in Figure 18. Also, stress cones 6 which are identical to the stress cones 6 shown in Figure 18 are fitted on the outside of the inner sheaths at both ends of cables 2.

Of these, contact pieces 8 are inserted in heads 5a of central conductors 5, and stress cones 6 are inserted in the inner sides of the through-holes formed in heads 5a. Stress cones 6 are pressed into the inner surfaces of the through-holes via silicone grease by tighteners (not illustrated) which are fitted to the ends of cables 2.

In Figure 13, roughly truncated cone-shaped female bushings 7A and 7B, with roughly V-shaped cross-sections, penetrate the ceilings of cubicles 1B and 1D, which compose a power distribution panel (not illustrated), from the top. The under-surfaces of flanges 11a formed on the outer peripheries of the upper ends of bushings 7A and 7B butt against the upper surfaces of cubicles 1B and 1D. Filler metal (not illustrated) is provided in flanges 11a. Bushings 7A and 7B are hermetically secured to the ceiling plates of cubicles 1B and 1D via O-rings (not illustrated) which are fitted to the filler metal and the ceiling plates.

Insulating layers 11, formed by injection-moulding epoxy resin on the outer peripheries of central conductors 10 buried in the cores, are formed in bushings 7A and 7B. Truncated cone-shaped depressions 11b are formed from the mid-sections to the upper ends of insulating layers 11. Inner peripheries of depressions 11b are coated with silicone grease 11c immediately before the lower parts of male bushings 3A and 3B shown in Figure 1 are inserted therein as described below.

In the conductive connectors composed as described above, firstly T-shaped bushings 3A and 3B and cable 2 constructed in this way are assembled, as shown in Figure 12, in the factory. Then, cubicles 1B and 1D are connected by inserting male side T-shaped bushings 3A and 3B, to which cable 2 is connected, into female side bushings 7A and 7B shown in Figure 13, and tightening T-shaped bushings 3A and 3B to cubicles 1B and 1D with tighteners (not illustrated). Also, the connection of cable 2 and T-shaped bushings 3A and 3B shown in Figure 12 is carried out on the work-bench of an assembly shop provided with dust-proof facilities, so the work can be carried out speedily and with high accuracy.

Moreover, at the installation site of the power distribution panel, cable 2 and T-shaped bushings 3A and 3B which have been assembled in transportable lengths (for instance 4 meters or less) can be assembled from the top of the cubicles of the power distribution panel which have been arranged in series as they stand, as described above. This not only simplifies the work, but also shortens the time required for carrying out connection work in a dusty environment. Also, as the coating of silicone grease is carried out immedicately before the assembly as described above, adhesion of dust to the surfaces coated with silicone grease is prevented. Therefore the reliability of the insulation of the connectors can be increased.

Next, Figure 14 and 15 show a conductive connector according to another embodiment of this inventions. Figure 14 is a diagram corresponding to Figure 12, and Figure 15 is a diagram corresponding to Figure 13.

Of these, Figure 14 is a vertical cross-sectional diagram showing the state in which female side bushings 13A and 13B are connected by cable 2. These are assembled in the factory in the same way as for Figure 12. In Figure 14, through-holes which penetrate the upper parts from left to right are formed in central conductors 15 and roughly U-shaped cross-section cylinders 15a are formed on their lower ends. Epoxy resin insulating layers 14 are formed on the outer peripheries of central conductors 15. Through-holes which penetrate from left to right are formed in the upper parts of insulating layers 14. Truncated cone-shaped depressions 13a are formed in the lower parts of insulating layers 14. Earthing layers 14b are formed on the outer peripheries of insulating layers 14.

Stress cones 6 are fitted into the two sides of the through-holes in bushings 13A and 13B in the same way as in Figure 12. Contact pieces 8, fitted to both ends of cable 2 by means of wedges (not illustrated), together with contact rings (not illustrated) are fitted into the through-holes formed in the upper parts of central conductors 15.

On the other hand, male bushings 16A and 16B are thrust through the ceilings of cubicles 1B and 1D from the top. Diamond-shaped cross-section epoxy resin insulating layers 17 are formed on the outer peripheries of central conductors 12 in bushings 16A and 16B, and flanges 17a are formed on their central parts. The lower surfaces of flanges 17a butt against the upper surfaces of the outer peripheries of the through-holes in cubicles 1B and 1D via O-rings (not illustrated) and are secured from above. Earthing layers 17b are formed on the outer peripheries of insulating layers 17 above flanges 17a. Contact pieces 9 of similar shape to, but slightly smaller than, contact pieces 8 are press-fitted to the upper ends of central conductors 12, and contact plates (not illustrated) are fitted on the outer peripheries of contact pieces 9.

In conductive connectors constructed in this way also, the connection of cable 2 and bushings 13A and 13B is carried out in the factory in the same way as for the conductive connectors shown in Figure 12. Also, at the installation site, depressions 13a formed in the lower parts of each bushing 13A and 13B are engaged with the silicone grease-coated truncated cone-shaped projections formed on the upper parts of each bushing 16A and 16B shown in Figure 15. Next, mild steel plate tighteners formed in roughly Ω shapes (not illustrated) are fitted from the upper parts of each bushing 13A and 13B. By tightening the tighteners on cubicles 1B and 1D, depressions 13a of bushings 13A and 13B are pressed on to bushings 16A and 16B.

In this case also, in the same way as for the cable connectors shown in Figures 12 and 13, the connection work can be carried out at the installation site in a short time, and the reliability of the insulation of the connectors can be increased.

As described in detail, this invention can provide a conductive connector for a switchgear which can make connection between cubicles of the switchgear simple.

Furthermore, this invention can provide a conductive connector for a switchgear which enables the withstand-voltage test to be performed more easily.

Obviously, numerous modifications and variations of the present invention are possible in light of the above teachings. It is therefore to be understood that within the scope of the appended claims, the invention may be practiced otherwise than as specifically described herein.

## Claims

1. A connector (23) for making a connection between at least one cable (8) which runs generally parallel to the wall of a switchgear housing (1A, 1B ..), and the interior of the housing, the connector comprising a lower bushing (2A) which is adapted to fit in an aperture of the wall of the housing and comprises a semi-tubular lower electrode (3a) and has an axially extending conductor member (3), an upper bushing (2B) comprising a semi-tubular upper electrode (5) which extends at right angles to the said conductor member, both electrodes (3a, 5) complementing each other to surround the cable (8) and to make contact with it so as to make an electrical connection to the conductor member and tightening means (9, 12A, 12C) for clamping the cable within the upper and lower bushings;
wherein the upper bushing is detachable to release the cable (8).

2. A connector according to claim 1, in which:
the lower bushing (2A) is made of electrically insulating material and is T-shaped having an open channel-shaped head extending orthogonal to a stem, the central conductor (3) projecting through said stem;
the electrode (3a) fitting in said channel of the shaped head and being electrically connected to the central conductor (3);
the upper bushing (2B) also being channel shaped and facing the open-channel shaped head to form a through-hole therewith;
the upper electrode (5) fitting in the upper channel shaped bushing so as to form a tubular electrode in said through hole.

3. A connector according to claim 2 further comprising an upstanding portion (4b) coaxial with said stem and housing a second central conductor (4a) coaxial with said first central conductor and electrically connected to said upper electrode (5).

4. A multiple connector assembly comprising a plurality of connectors according to claim 2 or claim 3, arranged in a side-by-side relationship so that their respective central conductors (3) are parallel with each other, and their respective channel-shaped heads of the lower bushings (2A) are parallel with each other.

5. A multiple connector assembly comprising a plurality of connectors according to claim 2, arranged in a side-by-side relationship so that their respective central conductors 3 are parallel with each other; each connector further comprising an upstanding portion (4b) containing a second central conductor (4a1, 4a2, 4a3) which is electrically connected to its respective presser electrode (5), and the said upstanding portions (4b) being arranged in a radially outwardly extending array, relative to the assembly.

6. A multiple connector assembly according to claim 3 or claim 5 in which the upstanding portion is hollow.

7. A multiple connector assembly according to claim 4 in which the axes of the central conductors are arranged in a triangular array.

8. A connector assembly according to any of claims 2 to 7, further comprising a gasket of insulating material positioned between the facing surfaces of said upper and lower bushings.

9. A connector assembly according to any of claims 2 to 8 in which each electrode (3a, 5) is mounted in its respective channel, on a liner of insulating material.

10. A connector assembly according to claim 8 or claim 9 in which the insulating material comprises a sheet of silicone gel, or a sheet of rubber coated with silicone gel, or a layer of epoxy resin.

11. A connector according to claim 1 in which the lower bushing comprises:
a male or female insulating member (16a; 7a) adapted to fit in an aperture of a switchgear housing and having an axially extending central conductor (12; 10) whose outer end is adapted to contact the end of a co-operating central conductor (15a; 5) of a mating female or male insulating member, and the upper bushing comprises an insulated bore extending in a direction orthogonal to the central conductor and adapted to receive a through conductor (8) with its central portion contacting the said central conductor, whereby an electrical connection can be made between the said central conductor (12; 10) and the said through conductor (8), when the co-operating male and female members are brought into engagement.

12. A connector according to claim 11 in which the female member is formed with a generally tapered socket and the male member is formed with a co-operating tapered projection.

13. A connector according to claim 11 or claim 12 in which the female member is fixed in the housing aperture so as to form a socket in the wall of the housing.

14. A connector according to claim 11 or claim 12 in which the male member is fixed in the housing aperture so as to form a projection from the wall of the housing.

## Patentansprüche

1. Ein Verbinder (23) zum Herstellen einer Verbindung zwischen wenigstens einem Kabel (8), das im wesentlichen parallel zu der Wandung (1A, 1B ..) eines Gehäuses einer Schalteinrichtung verläuft, und dem Inneren des Gehäuses, wobei der Verbinder eine untere Hülse (2A), die dafür vorgesehen ist, in eine Öffnung der Wandung des Gehäuses zu passen, und eine halbrohrförmige untere Elektrode (3a) umfaßt und ein sich axial erstreckendes Leitungsglied (3) aufweist, eine obere Hülse (2B), die eine halbrohrförmige obere Elektrode (5) aufweist, die sich im rechten Winkel zu dem genannten Leitungsglied erstreckt, wobei beide Elektroden (3a, 5) komplementär zueinander ausgebildet sind, um das Kabel (8) zu umgeben und dasselbe zu kontaktieren, um eine elektrische Verbindung mit dem Leitungsglied herzustellen, und Befestigungsmittel (9, 12A, 12 C) zum Klemmen des Kabels innerhalb der oberen und unteren Hülse aufweist;
wobei die obere Hülse lösbar ist, um das Kabel (8) freizugeben.

2. Ein Verbinder nach Anspruch 1, bei dem:
Die untere Hülse (2A) aus einem elektrisch isolierenden Material besteht und T-förmig mit einem offenen kanalförmigen Kopf ausgebildet ist, der sich senkrecht zu einem Stiel erstreckt, wobei der zentrale Leiter (3) durch den genannten Stiel hervorsteht;
die Elektrode (3a) in den genannten Kanal des geformten Kopfes paßt und elektrisch mit dem zentralen Leiter (3) verbunden ist;
die obere Hülse (2B) ebenfalls kanalförmig ausgebildet ist und dem als offener Kanal ausgebildeten Kopf gegenüberliegt, um mit diesem ein Durchgangsloch zu bilden;
die obere Elektrode (5) in die obere kanalförmige Hülse paßt, um eine rohrförmige Elektrode in dem genannten Durchgangsloch zu bilden.

3. Ein Verbinder nach Anspruch 2, der ferner einen nach oben gerichteten Bereich (4b) aufweist, der zu dem genannten Stiel koaxial ist und einen zweiten zentralen Leiter (4a) aufnimmt, der zu dem genannten ersten zentralen Leiter koaxial ist und mit der genannten oberen Elektrode (5) elektrisch verbunden ist.

4. Eine Mehrfachverbinderanordnung, die eine Mehrzahl von Verbindern nach Anspruch 2 oder 3 aufweist, die nebeneinander angeordnet sind, so daß ihre jeweiligen zentralen Leiter (3) parallel zueinander sind und ihre jeweiligen kanalförmigen Köpfe der unteren Hülsen (2A) parallel zueinander sind.

5. Eine Mehrfachverbinderanordnung, die eine Mehrzahl von Verbindern nach Anspruch 2 aufweist, die nebeneinander angeordnet sind, so daß ihre jeweiligen zentralen Leiter (3) parallel zueinander sind, wobei jeder Verbinder ferner einen nach oben gerichteten Bereich (4b) aufweist, der einen zweiten zentralen Leiter (4a1, 4a2, 4a3) enthält, der elektrisch mit der jeweiligen Presserelektrode (5) verbunden ist, wobei die nach oben gerichteten Bereiche (4b) in einer sich relativ zu der Anordnung radial nach außen erstreckenden Gruppierung angeordnet sind.

6. Eine Mehrfachverbinderanordnung nach Anspruch 3 oder Anspruch 5, bei der der nach oben gerichtete Bereich hohl ist.

7. Eine Mehrfachverbinderanordnung nach Anspruch 4, bei der die Achsen der zentralen Leiter in einer dreieckförmigen Gruppierung angeordnet sind.

8. Eine Verbinderanordnung nach einem der Ansprüche 2 bis 7, die ferner eine Dichtung aus isolierendem Material aufweist, die zwischen den einander gegenüberliegenden Flächen der genannten oberen und unteren Hülse angeordnet ist.

9. Eine Verbinderanordnung nach einem der Ansprüche 2 bis 8, bei der jede Elektrode (3a, 5) in ihrem jeweiligen Kanal auf einer Lage eines isolierenden Materiales befestigt ist.

10. Eine Verbinderanordnung nach Anspruch 8 oder 9, bei der das isolierende Material eine Schicht aus Silikongel oder eine Schicht aus mit Silikongel beschichteten Gummi oder eine Schicht aus Epoxidharz umfaßt.

11. Ein Verbinder nach Anspruch 1, bei der die untere Hülse umfaßt:
ein männliches oder weibliches Isolierelement (16a, 7a), das dafür vorgesehen ist, in eine Öffnung eines Gehäuses einer Schalteinrichtung zu passen, und das einen sich axial erstreckenden zentralen Leiter (12; 10) aufweist, dessen äußeres Ende dafür vorgesehen ist, das Ende eines mit diesem zusammenwirkenden zentralen Leiters (15a; 5) eines passenden männlichen oder weiblichen Isolierelementes zu kontaktieren, wobei die obere Hülse eine isolierte Bohrung aufweist, die sich in einer Richtung senkrecht zu dem zentralen Leiter erstreckt und dafür vorgesehen ist, einen Durchgangsleiter (8) aufzunehmen, wobei der zentrale Bereich den genannten zentralen Leiter kontaktiert, wodurch eine elektrische Verbindung zwischen dem zentralen Leiter (12; 10) und dem genannten Durchgangsleiter (8) hergestellt werden kann, wenn die zusammenwirkenden männlichen und weiblichen Elemente in Eingriff miteinander gebracht werden.

12. Ein Verbinder nach Anspruch 11, bei dem das weibliche Element mit einer sich im wesentlichen verjüngenden Muffe und das männliche Element mit einem mit dieser zusammenwirkenden sich verjüngenden Vorsprung ausgebildet ist.

13. Ein Verbinder nach Anspruch 11 oder 12, bei dem das weibliche Element in der Gehäuseöffnung befestigt ist, um eine Muffe in der Wandung des Gehäuses zu bilden.

14. Ein Verbinder nach Anspruch 11 oder 12, bei dem das männliche Element in der Gehäuseöffnung befestigt ist, um einen Vorsprung an der Wandung des Gehäuses zu bilden.

## Revendications

1. Dispositif de connexion (23) destiné à établir une connexion entre au moins un câble (8) qui s'étend généralement de manière parallèle à la paroi d'un carter d'appareil de coupure (1A, 1B, ...), et l'intérieur du carter, le dispositif de connexion comprenant une traversée inférieure (2A) qui est adaptée pour s'insérer dans une ouverture de la paroi du carter et qui comprend une électrode inférieure semi-tubulaire (3a) et a un élément conducteur s'étendant de manière axiale (3), une traversée supérieure (2B) comprenant une électrode supérieure semi-tubulaire (5) qui s'étend à angle droit par rapport audit élément conducteur, les deux électrodes (3a, 5) étant complémentaires l'une de l'autre afin d'entourer le câble (8) et d'établir le contact avec lui de manière à établir une connexion électrique avec l'élément conducteur et des moyens de serrage (9, 12A, 12C) destinés à serrer le câble à l'intérieur des traversées supérieure et inférieure ;
dans lequel la traversée supérieure peut être détachée de manière à dégager le câble (8).

2. Dispositif de connexion selon la revendication 1, dans lequel :
la traversée inférieure (2A) est fabriquée à partir d'un matériau électriquement isolant et est en forme de T ayant une tête en forme de canal ouvert qui s'étend de manière orthogonale par rapport à une tige, le conducteur central (3) faisant saillie à travers ladite tige ;
l'électrode (3a) s'insérant dans ledit canal de la tête formée et étant connectée électriquement au conducteur central (3) ;
la traversée supérieure (2B) se présentant également sous la forme d'un canal et faisant face à la tête en forme de canal ouvert de manière à former un trou débouchant avec celle-ci ;
l'électrode supérieure (5) s'insérant dans la traversée supérieure en forme de canal de manière à former une électrode tubulaire dans ledit trou débouchant.

3. Dispositif de connexion selon la revendication 2, comprenant en outre une partie verticale (4b) coaxiale avec ladite tige et renfermant un second conducteur central (4a) coaxial avec ledit premier conducteur central et connecté électriquement à ladite électrode supérieure (5).

4. Ensemble de connexion multiple comprenant une pluralité de dispositifs de connexion selon la revendication 2 ou la revendication 3, disposés dans une relation côte à côte de telle sorte que leurs conducteurs centraux respectifs (3) soient parallèles les uns aux autres, et que leurs têtes respectives en forme de canaux des traversées inférieures (2A) soient parallèles les unes aux autres.

5. Ensemble de connexion multiple comprenant une pluralité de dispositifs de connexion selon la revendication 2, disposés dans une relation côte à côte de telle sorte que leurs conducteurs centraux respectifs (3) soient parallèles les uns aux autres, chaque dispositif de connexion comprenant en outre une partie verticale (4b) contenant un second conducteur central (4a1, 4a2, 4a3) qui est connecté électriquement à son électrode de compression respective (5), et lesdites parties verticales (4b) étant disposées de manière à former un groupement qui s'étend de manière radiale vers l'extérieur, par rapport à l'ensemble.

6. Ensemble de connexion multiple selon la revendication 3 ou la revendication 5, dans lequel la partie verticale est creuse.

7. Ensemble de connexion multiple selon la revendication 4, dans lequel les axes des conducteurs centraux sont disposés de manière à former un groupement triangulaire.

8. Ensemble de connexion multiple selon l'une quelconque des revendications 2 à 7, comprenant en outre un joint d'étanchéité en matériau isolant positionné entre les surfaces opposées desdites traversées supérieure et inférieure.

9. Ensemble de connexion selon l'une quelconque des revendications 2 à 8, dans lequel chaque électrode (3a, 5) est montée dans son canal respectif, sur une chemise de matériau isolant.

10. Ensemble de connexion selon la revendication 8 ou la revendication 9, dans lequel le matériau isolant comprend une plaque de gel de silicone, ou une plaque de caoutchouc enduite de gel de silicone, ou une couche de résine époxy.

11. Dispositif de connexion multiple selon la revendication 1, dans lequel la traversée inférieure comprend :
un élément isolant mâle ou femelle (16a ; 7a) adapté pour s'insérer dans une ouverture d'un carter d'appareil de coupure et ayant un conducteur central qui s'étend de manière axiale (12 ; 10) dont l'extrémité extérieure est adaptée pour venir en contact avec l'extrémité d'un conducteur central coopérant (15a ; 5) d'un élément isolant mâle ou femelle d'accouplement, et la traversée supérieure comprend un alésage isolé qui s'étend dans une direction orthogonale par rapport au conducteur central et qui est adapté pour recevoir un conducteur traversant (8), sa partie centrale venant en contact avec ledit conducteur central, moyennant quoi une connexion électrique peut être établie entre ledit conducteur central (12 ; 10) et ledit conducteur traversant (8), lorsque lesdits éléments mâle et femelle coopérants sont mis en prise.

12. Dispositif de connexion selon la revendication 11, dans lequel l'élément femelle se compose d'une douille généralement conique et l'élément mâle se compose d'une saillie coopérante conique.

13. Dispositif de connexion selon la revendication 11 ou la revendication 12, dans lequel l'élément femelle est fixé dans l'ouverture de carter de manière à former une douille dans la paroi du carter.

14. Dispositif de connexion selon la revendication 11 ou la revendication 12, dans lequel l'élément mâle est fixé dans l'ouverture de carter de manière à former une saillie depuis la paroi du carter.
